Europäisches Patentamt

European Patent Office

Office européen des brevets

(19)

(11) Veröffentlichungsnummer: **0 148 459**
**B1**

(12) **EUROPÄISCHE PATENTSCHRIFT**

(45) Veröffentlichungstag der Patentschrift:
19.11.87

(51) Int. Cl.⁴: **B 23 K 9/04**

(21) Anmeldenummer: **84115584.9**

(22) Anmeldetag: **17.12.84**

(54) **Einrichtung zum Schweissplattieren von Rohren.**

(30) Priorität: **28.12.83 DE 3347319**

(43) Veröffentlichungstag der Anmeldung:
**17.07.85 Patentblatt 85/29**

(45) Bekanntmachung des Hinweises auf die Patenterteilung:
**19.11.87 Patentblatt 87/47**

(84) Benannte Vertragsstaaten:
**AT CH DE FR LI**

(56) Entgegenhaltungen:
**WO - A - 83/02573**
**DE - A - 2 701 169**
**US - A - 4 149 061**

**PATENTS ABSTRACTS OF JAPAN, Band 7, Nr. 173, 30. Juli 1983, Seite 133 M 232; & JP - A - 58 77 774 (KUROKI KOGYOSHO K.K.) 11-05-1983**

(73) Patentinhaber: **Siemens Aktiengesellschaft Berlin und München, Wittelsbacherplatz 2, D-8000 München 2 (DE)**

(72) Erfinder: **Förner, Siegfried, Leipzigerstrasse 69, D-8520 Erlangen (DE)**
Erfinder: **Langhammer, Karl-Heinz, Dipl.-Ing., Südwestkorso 17, D-1000 Berlin 41 (DE)**
Erfinder: **Pellkofer, Dieter, Dipl.-Ing., Sonnenstrasse 52, D-8522 Herzogenaurach (DE)**
Erfinder: **Nahr, Wolfgang, Fünfkirchener Strasse 15, D-8520 Erlangen (DE)**

**Beschreibung**

Die Erfindung betrifft eine Einrichtung zum Schweissplattieren der Innenseite von einem Rohrbogen mit einem in den Rohrbogen greifenden gekrümmten Ausleger, der an seinem freien Ende einen drehbaren Schweisskopf trägt, und mit einer den Rohrbogen und den Ausleger tragenden, als Rad ausgebildeten Drehvorrichtung.

Eine derartige Einrichtung ist aus der DE-AI-2 701 169 bekannt. Hierbei ist der zu plattierende Rohrbogen auf einem Drehtisch arretierbar. Parallel zur Oberfläche des Drehtisches ist ein sich nicht mitdrehender gekrümmter Ausleger angeordnet, der in den Rohrbogen hineingreift und an seinem freien Ende einen Schweisskopf trägt. Der Drehtisch mit dem Ausleger ist um einen Durchmesser kippbar gelagert und der Schweisskopf am freien Ende des gekrümmten Auslegers ist drehbar angeordnet.

Zum Schweissplattieren eines Streifens entlang einer Mantellinie auf der Innenoberfläche des Rohrbogens wird der Drehtisch gedreht, wodurch der Rohrbogen bezüglich des gekrümmten Auslegers bewegt wird. Soll dann der benachbarte Streifen plattiert werden, dann wird der Schweisskopf am Ausleger um einen entsprechenden Winkel gedreht und der Drehtisch wird um den gleichen Winkel gekippt. Dadurch ist gewährleistet, dass der Schweisskopf stets in vertikaler Ausrichtung arbeitet. Das Plattieren des benachbarten Streifens entlang einer Mantellinie auf der Innenoberfläche des Rohrbogens erfolgt wieder dadurch, dass der Drehtisch gedreht wird.

Mit einer derartigen Einrichtung werden frei für das Schweissplattieren von Rohrbögen notwendige Bewegungsabläufe so koordiniert, dass der gesamte Rohrbogen ohne Umspannen zu bearbeiten ist. Zum Plattieren entlang einer Mantellinie wird der Drehtisch um einen grossen Winkel gedreht. Um einen benachbarten Streifen zu plattieren, muss dann beim Bekannten nach dem Drehen des Schweisskopfes der gesamte Drehtisch zusammen mit dem Ausleger und dem Rohrbogen um einen kleinen Winkel gekippt werden, der dem Winkelabstand von zwei benachbarten zu plattierenden Streifen im Rohr entspricht. Das dadurch erforderliche feinfühlige Kippen der schweren Einrichtung um einen vorbestimmten kleinen Winkel, ist mit der erforderlichen Genauigkeit nur schwer durchführbar.

Der Erfindung liegt die Aufgabe zugrunde, eine Einrichtung zum Schweissplattieren der Innenseite von einem Rohrbogen zu entwickeln, die mit technisch einfachen Mitteln eine exakte Ausrichtung des Schweisskopfes bezüglich der jeweils zu plattierenden Bahn auf der Innenoberfläche des Rohrbogens ermöglicht.

Die Aufgabe wird erfindungsgemäss dadurch gelöst, dass die Drehvorrichtung den Rohrbogen umgibt, dass in dem Rad eine Schwenkvorrichtung angeordnet ist, die den Rohrbogen auf einem Kreisbogen um den Mittelpunkt des Rades quer zur Radebene bewegt, wobei der Schweisskopf in der Ebene des Rades drehbar ist, und der Ausleger an einem mit dem Rad verbundenen Teil der Schwenkvorrichtung angebracht ist.

Mit der erfindungsgemässen Einrichtung wird zum Plattieren entlang einer Mantellinie auf der Innenoberfläche des Rohrbogens dieser über den feststehenden, den Schweisskopf tragenden Ausleger, gestülpt. Es wird also eine Kippbewegung um einen grossen Winkel durchgeführt. Um eine benachbarte Bahn im Rohrbogen zu plattieren, wird der Schweisskopf weitergeführt und damit dieser stets in vertikaler Lage arbeitet, wird das Rad, in dem der Rohrbogen und die Schwenkvorrichtung mit dem gekrümmten Ausleger befestigt sind, um den notwendigen kleinen Winkel gedreht. Das Plattieren der einzelnen Bahnen erfolgt dann jeweils durch erneutes Schwenken des Rohrbogens.

Das Drehen einer schweren Anordnung um einen kleinen Winkel ist genauer und feinfühliger als eine entsprechende Kippbewegung durchführbar. Dieser Vorteil der erfindungsgemässen Einrichtung wird dadurch besonders deutlich, dass der Durchmesser der als Rad ausgebildeten Drehvorrichtung vielfach grösser ist als der Durchmesser des zu plattierenden Rohrbogens. Eine verhältnismässig grosse Drehbewegung des Rades bewirkt dann eine feinfühlige kleine Drehung des Rohrbogens. Mit der erfindungsgemässen Einrichtung zum Schweissplattieren der Innenseite eines Rohrbogens wird der Vorteil erzielt, dass die Plattierung auf der gesamten Innenoberfläche, ohne dass der Rohrbogen in seiner Halterung umgesetzt werden muss, auf einfache Weise mit gleichbleibender Dicke aufzubringen ist.

Eine genau reproduzierbare Bewegung des Rades kann dadurch erreicht werden, dass an seinem Aussenrand eine Verzahnung vorgesehen ist, der die mit einem feststehenden Antrieb zusammenwirkt. Die Verzahnung kann zum Beispiel mit einer Kette in Eingriff stehen, die die Bewegung von einem Antriebsmotor auf das Rad überträgt. Es ist aber auch denkbar, das Rad mit einem angetriebenen Zahnrad oder als Schneckenrad mit einer Spindel zusammenwirken zu lassen.

Zur Festlegung des Rades, das die gesamten von dem Rohrbogen ausgehenden Kräfte aufzunehmen hat, kann das Rad auf mindestens einer Seite einen zur Radachse konzentrischen zylindrischen Bund aufweisen, der zwischen zwei gegenüberliegenden Rollen geführt ist. Dabie ist es günstig, wenn an dem Bund eine weitere Rolle parallel zur Radachse anliegt. Die Rollen können gegebenenfalls unter Federvorspannung stehen, um eine spielfreie Anlage zu erhalten. Vorzugsweise sind sie mit Wälzlagern ausgerüstet, die einen leichten Lauf ermöglichen.

Die Schwenkvorrichtung kann vorteilhaft ein in der Ebene des Rades durch die Radachse weisendes Tragrohr umfassen, das im Rad gelagert ist und Aufspannmittel für einen durch die Radebene verlaufenden Rohrbogen aufweist. Dabei kann das Tragrohr auf beiden Seiten der Radachse im Rad gelagert sein und die Aufspannmittel sitzen dann zwischen den Lagern. Es ist aber auch möglich, dass eine einseitige Lagerung für das Tragen einer Planscheibe gewählt wird, um mit der neuen Einrichtung auch Teile bearbeiten zu können, die in die Radachse hineinragen. In diesem Sinne sind als Rohre auch andere Werkstücke, zum Beispiel die Gehäuse von Pumpen oder Ventilen, anzusehen, die mit der Erfindung ohne Umspannen schweissplattiert werden können.

Das Tragrohr kann eine Verzahnung aufweisen, die mit einem im Rad angeordneten, motorbetätigten Schneckenrad zusammenwirkt. Damit wird die Verstellung der Schwenkvorrichtung vorgegeben.

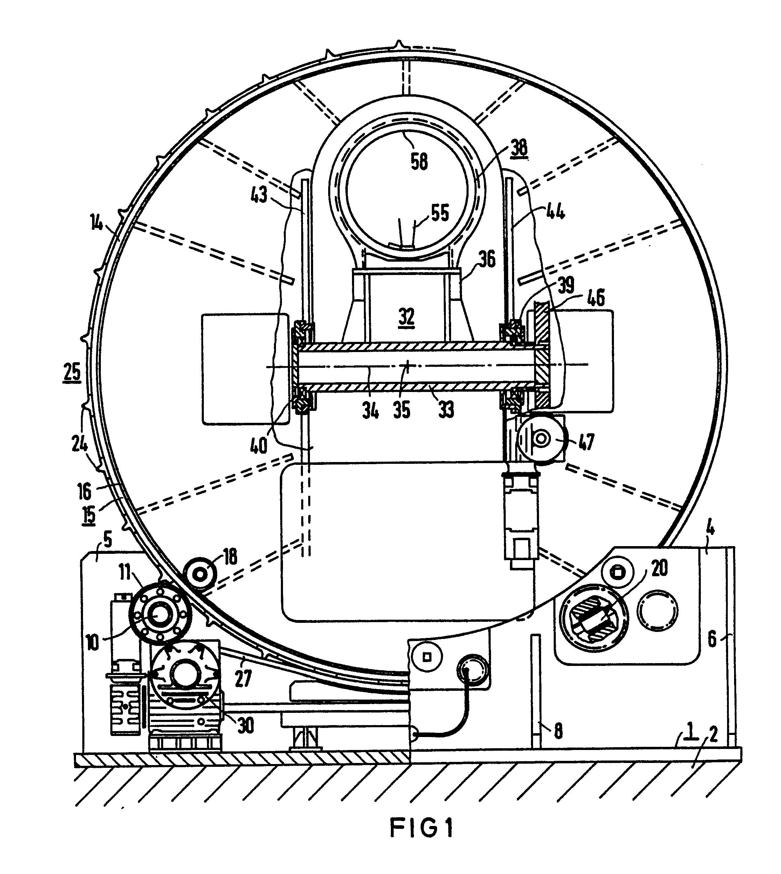

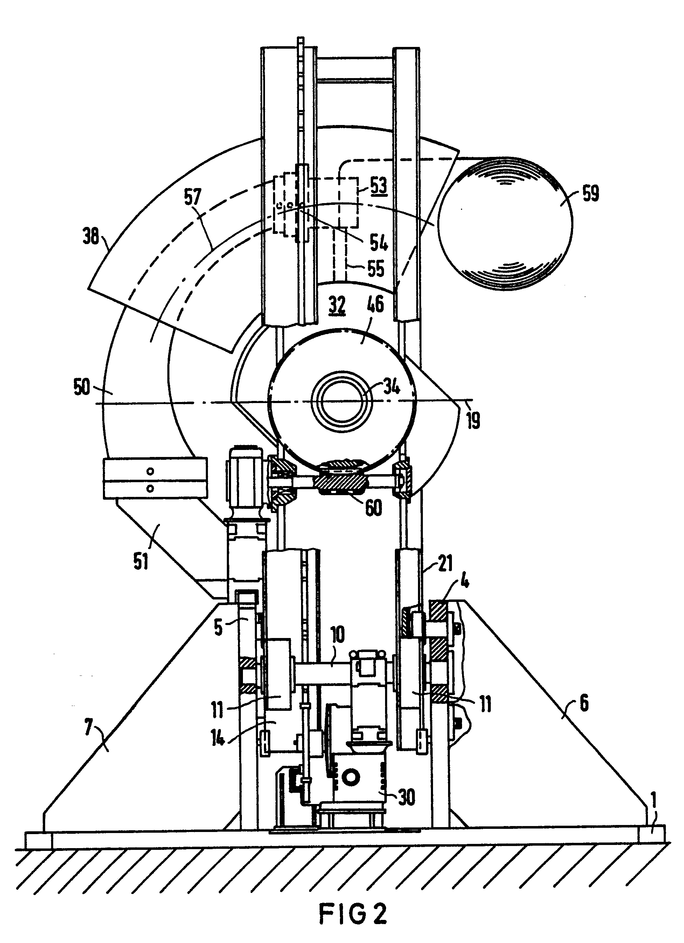

Zur näheren Erläuterung der Erfindung wird anhand der Zeichnung ein Ausführungsbeispiel beschrieben, das in den Fig. 1 und 2 in zwei zueinander rechtwinkligen Seitenansichten mit Teilschnitten dargestellt ist.

Die neue Einrichtung erhebt sich über einer Grundplatte 1, die etwa 3,5 × 4,5 m gross ist und auf dem Betonboden 2 einer Werkhalle verankert ist. Von der Grundplatte 1 gehen zwei symmetrische Stützbleche 4 und 5 aus, die mit Streben 6 und 7 an dem Aussenrand der Grundplatte verankert sind. Weitere Streben 8 stützen den Mittelbereich.

In den Stützblechen 4 und 5 sind mit gemeinsamen Achsen 10 Tragrollen 11 gelagert. Sie unterstützen den seitlich vorspringenden Bund 14 eines Radkörpers 15 an seinem Aussenrand 16, der einen Durchmesser von 4 m hat. Auf der Innenseite des Bundes 14 sind den Rollen 11 gegenüberstehende Führungsrollen 18 vorgesehen, so dass der Radkörper 15 in Richtung der Radebene, d.h. rechtwinklig zu seiner strichpunktiert gezeichneten Radachse 19 spielfrei festgelegt ist. Zusätzlich ist zur Halterung in Richtung der Radachse eine Seitenführung mit Hilfe von Rollen 20 vorgesehen. Diese wirken auf den in der Fig. 2 bei 21 dargestellten Aussenrand des Radkörpers.

Auf dem Aussenrand 16 des Radkörpers 15 sind dreissig gleiche Vorsprünge 24 unter einem Winkel von 12° gegeneinander gleichmässig verteilt befestigt. Sie bilden eine Verzahnung 25 am Umfang des Radkörpers 15, die in an der Unterseite des Radkörpers 15 angreifende Ketten 27 eingreift. Die Ketten 27 sind mit Hilfe von nicht weiter dargestellten Umlenkrollen zu einem Antriebsmotor 30 geführt, der auf der Grundplatte 1 befestigt ist. Somit kann der Radkörper 15 mit Hilfe der Kette 27 um 360° stufenlos aber einstellbar um die Radachse 19 verdreht werden.

Quer zur Achse 19 des Radkörpers 15 ist ein Tragrohr 33 so angeordnet, dass seine strichpunktiert dargestellte Achse 34 durch den Mittelpunkt 35 des Radkörpers 15 verläuft. Die Achse 34 liegt in der Radebene.

Das Tragrohr 33 ist Teil einer Schwenkvorrichtung 32, die einen Spannbock 36 für einen Rohrbogen 38 umfasst. Das Tragrohr 33 sitzt mit zwei Kugellagern 39 und 40 in zwei im Körper des Rades 15 gehaltenen Blechträgern 43, 44. Es trägt auf der Aussenseite des Blechträgers 44 ein Schneckenrad 46, das mit einer Schnecke 60 eines Antriebsmotors 47 so zusammenwirkt, dass das Tragrohr 33 mit dem Stützbock 36 um 180° hin- und hergeschwenkt werden kann.

In den Rohrbogen 38 greift ein gekrümmter Ausleger 50, der mit einem Krümmungsradius von 2 m die gleiche Krümmung wie der Rohrbogen 38 hat und von einer Konsole 51 ausgeht. Diese sitzt an dem mit dem Rad 15 verbundenen Teil der Schwenkvorrichtung 32. Der Ausleger 50 trägt an seinem in den Rohrbogen 38 ragenden freien Ende einen Schweisskopf 53, der in der Radebene um 360° verstellbar ist. Der Schweisskopf 53 umfasst im wesentlichen einen Kreuzschlitten 54 zur rechtwinkligen Verstellung einer Schweisselektrode 55. Damit wird längs Mantellinen des Rohrbogen 38, d.h. in parallelen Bahnen zu der strichpunktiert angedeuteten Achse 57, eine Schweissverbindung von Blechstreifen aus austenitischem Material mit der Innenseite 58 des Rohrbogens 38 hergestellt, die von einer Rolle 59 abgezogen werden.

Der Rohrbogen 38 wird über den im Rad 15 feststehenden Ausleger 50 bewegt und dabei längs Mantellinen hin- und hergehend mit der Schweissplattierung versehen.

Die hin- und hergehende Bewegung wird durch die Bewegung der Schwenkvorrichtung 32, d.h. durch eine Drehung des Tragrohres 33 um seine Längsachse hervorgerufen, die mit der in das Schneckenrad 46 greifenden Schnecke 60 gesteuert wird. Nach jedem Hin- oder Hergang wird durch eine Drehung des Radkörpers 15 dafür gesorgt, dass die nächste Lage an die tiefste Stelle des Rohres 38 kommt. Gleichzeitig wird durch eine gegenläufige Verstellung des Schweisskopfes 53 sichergestellt, dass die Schweisselektrode 55 auch beim Schweissen der Nachbarbahn immer in vertikaler Richtung liegt, so dass für den für den Schweisslichtbogen und das diesem zugeführte Pulver die optimalen Lagenbedingungen beibehalten werden.

Die genannte Einstellung erfolgt durch eine schrittweise Verstellung des Radkörpers 15 mit Hilfe der Verzahnung 25 und der Kette 27. Dabei wird der Rohrbogen 38 insgesamt um 360° gedreht. Die Zahl der einzelnen Schritte ist durch die Breite der einzuschweissenden Bänder gegeben. Die Verstellung des Schweisskopfes 53 kann in bekannter Weise mit einem Drehwerk vorgenommen werden, so dass der Schweisskopf bei der letzten Lage des Bandmaterials ebenfalls um 360°, jedoch im Gegensinn zum Radkörper 15 gedreht ist.

**Patentansprüche**

1. Einrichtung zum Schweissplattieren der Innenseite von einem Rohrbogen (38) mit einem in den Rohrbogen (38) greifenden gekrümmten Ausleger (50), der an seinem freien Ende einen drehbaren Schweisskopf (53) trägt, und mit einer den Rohrbogen (38) und den Ausleger (50) tragenden, als Rad (15) ausgebildeten Drehvorrichtung, dadurch gekennzeichnet, dass die Drehvorrichtung den Rohrbogen (38) umgibt, dass in dem Rad (15) eine Schwenkvorrichtung (32) angeordnet ist, die den Rohrbogen (38) auf einen Kreisbogen um den Mittelpunkt (35) des Rades (15) quer zur Radebene bewegt, wobei der Schweisskopf (53) in der Ebene des Rades (15) drehbar ist, und der Ausleger (50) an einem mit dem Rad (15) verbundenen Teil (51) der Schwenkvorrichtung (32) angebracht ist.

2. Einrichtung nach Anspruch 1, dadurch gekennzeichnet, dass das Rad (15) vorzugsweise an seinem Aussenrand (16) eine Verzahnung (25) aufweist, die mit einem feststehender Antrieb (30) zusammenwirkt.

3. Einrichtung nach Anspruch 2, dadurch gekennzeichnet, dass die Verzahnung (25) mit einer Kette (27) oder einem Schneckenrad zusammenwirkt.

4. Einrichtung nach einem der Ansprüche 1 bis 3, dadurch gekennzeichnet, dass das Rad (15) auf mindestens einer Seite einen zur Radachse (19) konzentrischen zylindrischen Bund (14) aufweist, der zwischen zwei gegenüberliegenden Rollen (11, 18) geführt ist.

5. Einrichtung nach Anspruch 5, dadurch gekennzeichnet, dass an dem Bund (14) eine weitere Rolle (20) parallel zur Radachse (19) anliegt.

6. Einrichtung nach einem der Ansprüche 1 bis 5, dadurch gekennzeichnet, dass die Schwenkvorrichtung (32) ein in der Ebene des Rades (15) durch die Radachse (19) weisendes Tragrohr (33) umfasst, das im Rad (15) gelagert ist und Aufspannmittel (36) für einen durch die Radebene verlaufenden Rohrbogen (38) aufweist.

7. Einrichtung nach Anspruch 6, dadurch gekennzeichnet, dass das Tragrohr (33) auf beiden Seiten der Radachse (19) im Rad (15) gelagert ist und dass die Aufspannmittel (36) zwischen den Lagern (39, 40) sitzen.

8. Einrichtung nach Anspruch 6, dadurch gekennzeichnet, dass das Tragrohr (33) einseitig gelagert ist und eine Planscheibe zum Aufspannen von Werkstücken trägt.

9. Einrichtung nach Anspruch 6, 7 oder 8, dadurch gekennzeichnet, dass das Tragrohr (33) eine Verzahnung (46) aufweist, die mit einem im Rad (15) angeordneten, motorbetätigten Schneckenrad (48) zusammenwirkt.

**Claims**

1. An arrangement for plating the inside of a tube bend (38) having a curved arm (50) which grips in the tube bend (38) and at its free end carries a rotatable welding head (53), and a rotatory device constituted by a wheel (15) which carries the tube bend (38) and the arm (50), characterised in that the rotatory device surrounds the tube bend (38); that a pivoting device (32) is arranged in the wheel (15) which moves the tube bend (38) along an arc about the centre point (35) of the wheel (15) at right angles to the plane of the wheel, wherein the welding head (53) can be rotated in the plane of the wheel (15) and the arm (50) is attached to a part (51) of the pivoting device (32) connected to the wheel (15).

2. An arrangement as claimed in claim 1, characterised in that the wheel (15) has teeth (25) which are preferably located on its outer edge (16) and which co-operate with a stationary drive (30).

3. An arrangement as claimed in claim 2, characterised in that the teeth (25) co-operate with a chain (27), or a worm gear.

4. An arrangement as claimed in one of claims 1 to 3, characterised in that on at least one side the wheel (15) has a cylindrical collar (14) which is concentric with the axis (19) of the wheel and is guided between two opposed rollers (11, 18).

5. An arrangement as claimed in claim 5, characterised in that a further roller (20) rests on the collar (14) parallel with the axis (19) of the wheel.

6. An arrangement as claimed in one of claims 1 to 5, characterised in that the pivoting device (32) comprises a supporting tube (33) which passes through the axis (19) of the wheel in the plane of the wheel (15), is mounted in the wheel (15) and has clamping means (36) for a pipe bend (38) passing through the plane of the wheel.

7. An arrangement as claimed in claim 6, characterised in that the supporting tube (33) is mounted in the wheel (15) on both sides of the axis (19) of the wheel; and that the clamping means (36) sit between the bearings (39, 40).

8. An arrangement as claimed in claim 6, characterised in that the supporting tube (33) is mounted at one side and has a face plate for clamping work pieces.

9. An arrangement as claimed in claim 6, 7 or 8, characterised in that the supporting tube (33) has teeth (46) which co-operate with a motor-driven worm gear (48) disposed in the wheel (15).

**Revendications**

1. Installation de placage par soudage du côté intérieur d'un coude du tuyau (38) comprenant un bras coudé (50), qui pénètre dans la coude de tuyau (38) et dont l'extrémité libre porte une tête de soudage (53) tournante, et un dispositif d'entraînement en rotation, qui porte le coude de tuyau (38) et le bras (50) et qui est constitué sous la forme d'une roue (15), caractérisée en ce que le dispositif d'entraînement en rotation entoure le coude de tuyau (38), en ce que dans la roue (15) est prévu un dispositif de basculement (32) qui déplage le coude de tuyau (38) sur un arc de cercle autour du centre (35) de la roue (15) transversalement au plan de la roue (15) et le bras (50) est monté sur une partie (51) du dispositif de basculement (32), qui est reliée à la roue (15).

2. Installation suivant la revendication 1, caractérisée en ce que la roue (15) comporte, de préférence, sur son bord extérieur (16), une denture (25) qui coopère avec un dispositif d'entraînement fixe.

3. Installation suivant la revendication 2, caractérisée en ce que la denture (25) coopère avec une chaîne (27) ou avec une roue à denture hélicoïdale.

4. Installation suivant l'une des revendications 1 à 3, caractérisée en ce que la roue (15) comporte, au moins d'un côté, un collet (14) cylindrique concentrique à l'axe de la roue (19) et guidé entre deux galets (11, 18) opposés.

5. Installation suivant la revendication 4, caractérisée en ce que, sur le collet (14), s'applique un autre galet (20) parallèlement à l'axe de la roue (19).

6. Installation suivant l'une des revendications 1 à 5, caractérisée en ce que le dispositif de basculement (32) comprend un tube-support (33) qui passe, dans le plan de la roue (15), par l'axe de la roue (19), qui est monté dans la roue (15) et qui comporte des moyens de blocage (36) d'un coude de tuyau (38) s'étendant dans le plan de la roue.

7. Installation suivant la revendication 6, caractérisée en ce que le tube-support (33) est monté dans la roue (15) des deux côtés de l'axe de la roue (19), et en ce que les moyens de blocage (36) sont fixés entre les paliers (39, 40).

8. Installation suivant la revendication 6, caractérisée en ce que le tube-support (33) est monté d'un côté et porte un disque plan pour le blocage de pièces.

9. Installation suivant la revendication 6, caractérisée en ce que le tube-support (33) comporte une denture (46) qui coopère avec une roue à denture hélicoïdale (48) disposée sur la roue (45) at actionnée par un moteur.

FIG 1

**FIG 2**